# EUROPÄISCHE PATENTSCHRIFT

(11) **EP 2 278 149 B1**
(45) Veröffentlichungstag und Bekanntmachung des Hinweises auf die Patenterteilung: **04.03.2020**
(21) Anmeldenummer: 10170045.8
(22) Anmeldetag: 19.07.2010
(51) Int. Cl.: F02B 29/04, F02M 26/32

(54) **WÄRMETAUSCHER UND AUFLADESYSTEM**
HEAT EXCHANGER AND CHARGING SYSTEM
ECHANGEUR THERMIQUE ET SYSTÈME DE CHARGEMENT

(30) Priorität: 24.07.2009 DE 102009034723
(43) Veröffentlichungstag der Anmeldung: 26.01.2011
(73) Patentinhaber: MAHLE Behr GmbH & Co. KG, 70469 Stuttgart (DE)
(72) Erfinder: Irmler, Klaus, 72072 Tübingen (DE); Fabrizius, Alexander, 34125 Kassel (DE); Beger, Christian, 04808 Röcknitz (DE); Feldhaus, Georg, 70374 Stuttgart (DE); Beeckmann, Nils, 70597 Stuttgart (DE)
(74) Vertreter: Grauel, Andreas

(56) Entgegenhaltungen:
- EP-A1- 1 148 231
- WO-A1-2010/018083
- JP-A- 2000 045 884
- JP-A- 2000 234 566
- JP-A- 2000 274 990
- US-A1- 2006 090 880
- US-A1- 2008 047 685

## Beschreibung

Die Erfindung betrifft einen Wärmetauscher gemäß dem Oberbegriff des Anspruchs 1 sowie ein Aufladesystem mit einem solchen Wärmetauscher.

Wärmetauscher der eingangs genannten Art können beispielsweise als Abgaskühler zur Abgaskühlung in einem Abgasrückführsystem einer Brennkraftmaschine oder als Ladeluftkühler zur direkten oder indirekten Kühlung von Ladeluft in einem Ladeluftzuführsystem für eine Brennkraftmaschine oder einem ähnlichen Aufladesystem einer Brennkraftmaschine eines Kraftfahrzeugs eingesetzt werden. Gaskühler dieser Art haben beispielsweise als Abgaskühler die Aufgabe, heißes Abgas von Verbrennungsmotoren, wie einem Diesel- oder Ottomotor, zu kühlen, damit dieses gekühlte Abgas der Ansaugluft beigemischt werden kann. Das erste Fluid kann beispielsweise ein Abgas und/oder eine Ladeluft sein. Das zweite Fluid ist beispielsweise ein Kühlmittel oder dergleichen. Zur Steigerung des thermodynamischen Wirkungsgrades einer Brennkraftmaschine, beispielsweise der vorgenannten Art, ist die Abkühlung des ersten Fluids auf ein vergleichsweise niedriges Niveau anzustreben. Bei Dieselmotoren wird eine Abgasrückführung angewandt, um vornehmlich eine Reduzierung von Schadstoffen, wie Stickoxiden oder dergleichen, im Abgas zu erreichen. Bei Ottomotoren dient eine Abgasrückführung primär der Kraftstoffeinsparung,

Der eingangs definierte Aufbau eines Wärmetauschers umfasst ein Gehäuse mit einem Gehäuseinnenraum, in den ein Wärmetauscher-Kern zur Umsetzung des Wärmetausches eingesetzt ist. Die durchströmbaren Strömungskanäle des Wärmetauscher-Kerns sind beispielsweise in Form eines Rohrbündels gebildet, wobei das erste Fluid in Form von Abgas die Rohre durchströmt. Die Strömungskanäle in Form der Rohre werden von Kühlmittel im durchströmbaren Gehäuseinnenraum umspült, sodass das Kühlmittel über den Wärmeübergang das Abgas kühlen kann.

Bei zunehmend gesteigerten Leistungsdichten ist es erforderlich, zunehmend hohe Abgastemperaturen auf vergleichsweise geringem Bauraum zu senken bzw. durch das Kühlmittel aufzunehmen. Diese Problematik stellt sich insbesondere im Eingangsbereich eines Wärmetauschers. Bedingt durch vergleichsweise hohe Temperaturen des ersten Fluids kann das zweite Fluid vor allem in einem Gebiet hinter dem Eintritt des ersten Fluids im schlimmsten Fall zum Sieden kommen. Dies verschlechtert den Wärmeübergang und greift das Material des Wärmetauschers in erhöhtem Maße an. Im schlimmsten Fall kann dies die Lebensdauer des Wärmetauschers verkürzen.

Im Prinzip kann der Siedegefahr durch eine Steigerung des Kühlmitteldurchsatzes entgegengewirkt werden. Diesem sind jedoch Grenzen gesetzt, da eine Steigerung des wirksamen Kühlmitteldurchflusses auch zu einer Vergrößerung des Wärmetauschers, insbesondere Kühlers, führt - zum Beispiel durch eine Erhöhung der Anzahl von Strömungskanälen. Außerdem wird die Menge des durch den Kühler strömenden Kühlmittels durch einen kühlmittelseitigen Strömungswiderstand des Kühlers begrenzt.

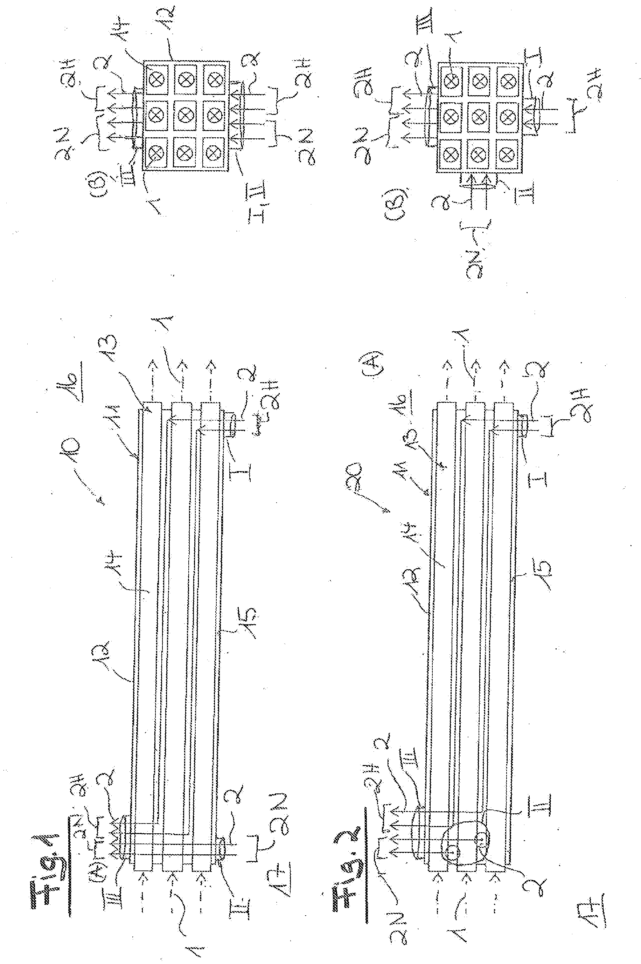

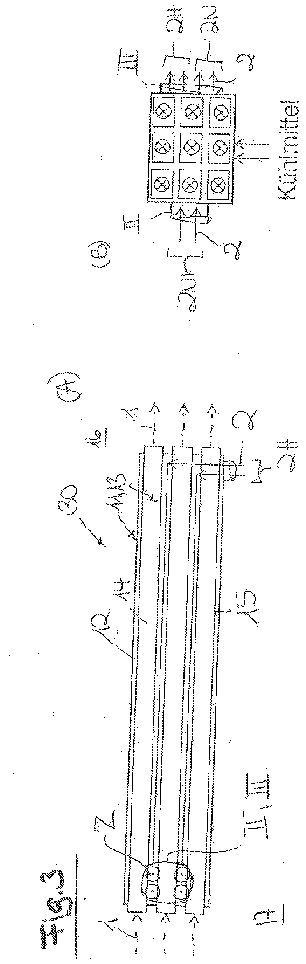

Im Stand der Technik, beispielsweise in US 2008/0047685 A1, sind verschiedene Maßnahmen zur Führung des Kühlmittels im Wärmetauscher beschrieben worden - in obiger Schrift beispielsweise in Fig. 2 oder Fig. 3 - durch Umleitung des Kühlmittels mittels Prallplatten oder dergleichen. Auch dies erhöht den kühlmittelseitigen Strömungswiderstand des Kühlers.

Zudem offenbaren die EP 1 148 231 A1, die JP 2000 274990 A oder die JP 2000 234566 A weitere Maßnahmen zur Führung eines Kühlmittels in einem Wärmetauscher.

Wünschenswert wäre eine gesteigerte Kühlleistung eines Wärmetauschers, ohne dass der kühlmittelseitige Strömungswiderstand unverhältnismäßig steigt. Insbesondere sollte ein thermodynamischer Wirkungsgrad des Wärmetauschers vergleichsweise gut sein. Insbesondere sollte der Kühlmittelbedarf bzw. der Bauraumbedarf eines Wärmetauschers nicht unverhältnismäßig steigen.

An dieser Stelle setzt die Erfindung an, deren Aufgabe es ist, einen Wärmetauscher anzugeben, bei dem eine Verbesserung der Kühlleistung erreicht wird, ohne dass ein kühlmittelseitiger Strömungswiderstand unverhältnismäßig erhöht wird.

Betreffend den Wärmetauscher wird die Aufgabe durch die Erfindung mittels einem Wärmetauscher der eingangs genannten Art gelöst, bei dem erfindungsgemäß die Merkmale des kennzeichnenden Teils des Anspruchs 1 vorgesehen sind.

Die Erfindung geht von der Überlegung aus, dass es, ausgehend von US 2008/0047685 A1, grundsätzlich vorteilhaft ist, eine Strömung des zweiten Fluids im Gehäuseinnenraum in Form einer - größtenteils parallel zu einer Strömung des ersten Fluids verlaufenden - Hauptströmung und einer - größtenteils in einem Schnitt quer zur Strömung des ersten Fluids verlaufenden - Nebenströmung zu führen. Die Erfindung hat erkannt, dass sich dies erreichen lässt, indem die Strömungsanschlüsse des Gehäuses zum durchströmbaren Gehäuseinnenraum entsprechend angeordnet sind.

Die Erfindung hat darüber hinaus erkannt, dass sowohl die Strömungsführung der Hauptströmung als solche als auch die Anordnung der Strömungsanschlüsse noch verbessert werden kann. Die Überlegung der Erfindung berücksichtigt dabei thermodynamische Vorteile einer Strömungsführung als auch die Verweilzeit des zweiten Fluids im Gehäuseinnenraum.

In einer ersten erfindungsgemäßen Alternative (a) sieht das Konzept der Erfindung eine Anordnung der Strömungsanschlüsse derart vor, dass die Hauptströmung in einer Richtung entgegen der Strömung des ersten Fluids verläuft. Dabei hat die Erfindung erkannt, dass ein Gegenstrombetrieb eines Wärmetauschers einen grundsätzlich vorteilhaften thermodynamischen Wirkungsgrad gegenüber einem Gleichstrombetrieb aufweist.

Gleichwohl eignet sich auch ein Gleichstrombetrieb eines Wärmetauschers, da im Gleichstrombetrieb vor allem der mit besonders heißem ersten Fluid beaufschlagte Eingangsbereich des Wärmetauschers mit dem zweiten Fluid bei niedrigster Temperatur beaufschlagt wird. In einer zweiten Alternative (b) schlägt das Konzept somit vor, dass die Hauptströmung in einer Richtung der Strömung des ersten Fluids verläuft und darüber hinaus die Verweilzeit der Nebenströmung und/oder der Hauptströmung, d.h. die Verweilzeit des zweiten Fluids, im Wärmetauscher erhöht ist. Zur zweiten Alternative (b) schlägt das Konzept weiter vor, die Strömungsanschlüsse derart anzuordnen, dass (i) der Nebenströmung in dem Schnitt ein schräger oder gekrümmter Strömungsverlauf aufgezwungen wird und/oder (ii) der Hauptströmunggrundsätzlich in einer Richtung der Strömung des ersten Fluids verlaufendeine ebenfalls erhöhte Verweilzeit verliehen wird, indem die Strömungsanschlüsse der Hauptströmung an unterschiedlichen Seiten des Gehäuses am Gehäuseinnenraum angeschlossen sind.

Betreffend die Alternative (b), Fall (i), wurde insbesondere erkannt, dass das Kühlmittel einer Nebenströmung wegen des oftmals vergleichsweise geringen Querschnitts des Wärmetauschers ohnehin eine geringe Verweilzeit im Wärmetauscher hat - deswegen ist die Wirkung eines schrägen oder gekrümmten Strömungsverlaufs der Nebenströmung besonders effektiv zur Erhöhung der Kühlwirkung des zweiten Fluids in der Nebenströmung. Betreffend die Alternative (b), Fall (ii), wurde insbesondere erkannt, dass sich die Hauptströmung mit Strömungsanschlüssen an unterschiedlichen Seiten des Gehäuses am Gehäuseinnenraum anschließen lässt, ohne dass ein Druckverlust der Hauptströmung wesentlich erhöht ist - dennoch wird dadurch die Verweilzeit des zweiten Fluids in der Hauptströmung vorteilhaft beeinflusst.

Besonders vorteilhaft lassen sich die im Fall (i) und/oder Fall (ii) definierten Möglichkeiten auch für die Alternative (a) realisieren.

Das Konzept der Erfindung lässt sich grundsätzlich anwenden auf einen, vorteilhaft in I-Bauweise aber auch in U-Bauweise gebildeten Wärmetauscher. Der erstere wird vom ersten Fluid in Axialrichtung durchströmt, ohne dass das erste Fluid umgeleitet wird. Der letztere wird mit einer einmaligen oder mehrmaligen, die Strömungsrichtung umkehrenden Umleitung des ersten Fluids durchströmt.

Weitere vorteilhafte Weiterbildungen der Erfindung sind den abhängigen Ansprüchen 2 bis 5 zu entnehmen und geben im Einzelnen vorteilhafte Möglichkeiten an, das oben erläuterte Konzept im Rahmen der Aufgabenstellung sowie hinsichtlich weiterer Vorteile zu realisieren.

So hat es sich insbesondere betreffend die Alternative (a) als besonders vorteilhaft erwiesen, dass die Hauptströmung in einer Richtung entgegen der Strömung des ersten Fluids verläuft und bei diesem sogenannten Gegenstromprinzip ein Strömungsanschluss der Hauptströmung auf einer Führungsaustrittseite des ersten Fluids angeordnet ist. Mit anderen Worten wird das zweite Fluid der Hauptströmung an einer Gehäuseinnenraumseite eingeleitet, welche der Führungsaustrittseite des ersten Fluids entspricht.

Insbesondere betreffend die Alternative (b) hat es sich als besonders vorteilhaft erwiesen, dass die Hauptströmung in Richtung der Strömung des ersten Fluids verläuft und bei diesem sogenannten Gleichstromprinzip ein Strömungsanschluss der Hauptströmung auf einer Führungseintrittseite des ersten Fluids angeordnet ist. Mit anderen Worten wird die Hauptströmung auf einer Gehäuseinnenraumseite eingeführt, welche der Führungseintrittseite des ersten Fluids entspricht.

Je nach Bedarf kann das Gleichstromprinzip gewählt werden, wenn z.B. eine Spitzenkühllast im Führungseintrittsseitenbereich erforderlich ist, und das Gegenstromprinzip gewählt werden, wenn ein besonders vorteilhafter thermodynamischer Wirkungsgrad erreicht werden soll.

Darüber hinaus kann die Alternative (b), Fall (ii), derart weitergebildet werden, dass die Nebenströmung in dem Schnitt einen geradlinigen Strömungsverlauf hat. Es hat sich gezeigt, dass bei einer Hauptströmung, die mit Strömungsanschlüssen an unterschiedlichen Seiten des Gehäuses am Gehäuseinnenraum angeschlossen ist, dennoch eine vorteilhafte Wirkung gemäß dem Konzept der Erfindung erreicht werden kann, wenn die Nebenströmung in einem Schnitt einen geradlinigen Strömungsverlauf hat.

Die Erfindung sieht vor, dass das Gehäuse eine Anordnung von wenigstens drei Strömungsanschlüssen aufweist. Als besonders vorteilhaft hat sich eine Anordnung von genau drei Strömungsanschlüssen erwiesen, von denen einer einen gemeinsamen Anschluss für Hauptströmung und Nebenströmung bildet. Dies lässt sich vom Material und konstruktiven Aufwand besonders einfach realisieren.

Im Falle des Gleichstromprinzips hat es sich als vorteilhaft erwiesen, dass ein gemeinsamer Anschluss für Hauptströmung und Nebenströmung eine Zuführung des zweiten Fluids ist. Im Falle eines Gegenstromprinzips hat es sich als vorteilhaft erwiesen, dass ein gemeinsamer Anschluss für Hauptströmung und Nebenströmung eine Abführung des zweiten Fluids ist.

Darüber hinaus lassen sich unterschiedliche Bauformen realisieren, die ggf. Anschlusserfordernisse im Motorraum erfüllen können und die hinsichtlich ihres thermodynamischen Wirkungsgrads und Kühlkapazität für eine Spitzentemperatur unterschiedlich wirksam sind.

In vorteilhafter Weise lassen sich in einer ersten Variante alle Strömungsanschlüsse auf einer Unter- und Oberseite oder alle Strömungsanschlüsse auf einer seitlichen Seite des Gehäuses anordnen. Dies erweist sich hinsichtlich des Strömungsquerschnitts und des thermodynamischen Wirkungsgrads als besonders vorteilhaft, insbesondere in Realisierung eines Gegenstromprinzips für die Hauptströmung.

In weiteren Varianten können die Strömungsanschlüsse auf unterschiedlichen Seiten des Gehäuses angeordnet sein. Beispielsweise kann ein Anschluss für eine Nebenströmung auf einer seitlichen Seite des Gehäuses angeordnet sein und ein Anschluss für eine Hauptströmung auf einer Unterseite eines Gehäuses angeordnet sein. Diese Art der Ausführung hat sich besonders zur Erhöhung der Verweilzeit des Kühlmittels einer Nebenströmung im Gehäuseinnenraum als vorteilhaft erwiesen und eignet sich somit vor allem zur Kühlung von Spitzentemperaturen im Eintrittsbereich des ersten Fluids im Wärmetauscher. Insbesondere lässt sich dazu wenigstens ein Strömungsanschluss und/oder ein gemeinsamer Anschluss auf einer seitlichen Seite des Gehäuses anordnen.

Generell ist es vorteilhaft, dass die Strömungsanschlüsse derart ausgeführt sind, dass im Betrieb die Hauptströmung einen größeren Strömungsdurchsatz als die Nebenströmung hat. Insbesondere hat sich als vorteilhaft erwiesen, dass im Betrieb ein Verhältnis des Strömungsdurchsatzes der NebenStrömung zum Strömungsdurchsatz der Hauptströmung im Bereich zwischen 0,5 und 0,99 liegt

Die Erfindung führt gemäß dem Konzept auch auf ein Aufladesystem, aufweisend einen erfindungsgemäßen Wärmetauscher. Ein Aufladesystem kann insbesondere in Form eines Abgasrückführsystems oder eines Ladeluftsystems realisiert sein.

Vorteilhaft eignet sich ein Aufladesystem mit einer Leitung zum Transport des zweiten Fluids, bei dem der Wärmetauscher in Serie oder parallel zu der Leitung des zweiten Fluids angeschlossen ist. Vorteilhaft ist die Leitung eine zur Motorkühlung geführte Leitung. Konkret kann ein Motorkühlmittel, auch in Form des zweiten Fluids, zur Kühlung des ersten Fluids dienen. Der Wärmetauscher kann dabei in einer Motorkühlmittelleitung angeschlossen sein oder in einer parallel zur Motorkühlmittelleitung geführten Leitung.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der in den Ansprüchen definierten Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1:: eine erste erfindungsgemäße Ausführungsform eines Wärmetauschers in schematischer Darstellung, bei dem im Rahmen des Gegenstromprinzips genau drei Strömungsanschlüsse alle auf einer Unter- und Oberseite angeordnet sind;
- Fig. 2:: eine zweite nicht erfindungsgemäße Ausführungsform eines Wärmetauschers in schematischer Darstellung, bei dem im Rahmen eines Gegenstromprinzips die drei Strömungsanschlüsse auf unterschiedlichen Seiten des Gehäuses angeordnet sind;
- Fig. 3:: eine dritte nicht erfindungsgemäße Ausführungsform eines Wärmetauschers in schematischer Darstellung, bei dem im Rahmen des Gegenstromprinzips die drei Strömungsanschlüsse auf unterschiedlichen Seiten des Gehäuses angeordnet sind - während in Fig. 2 die Mehrzahl auf Unter- und Oberseite angeordnet ist, ist bei Fig. 3 die Mehrzahl auf seitlichen Seiten des Gehäuses angeordnet.

Fig. 1 zeigt einen Wärmetauscher 10 in Form eines Abgaskühlers zum Wärmetausch zwischen einem ersten Fluid 1 in Form eines Abgases und einem zweiten Fluid 2 in Form eines Kühlmittels, beispielsweise Wasser oder eines wasserbasierten Kühlmittels. Vorliegend ist der Wärmetauscher-Block 11 schematisch mit dem Gehäuse 12 und einem Wärmetauscher-Kern 13 dargestellt. Der Wärmetauscher-Kern 13 weist eine Anzahl von Strömungskanälen 14 in Form von Rohren auf, die zur Führung des Abgases getrennt vom Kühlmittel dienen. Der Wärmetauscher-Kern 13 ist im Gehäuseinnenraum 15 angeordnet. Die Strömungskanäle 14 sind dabei regelmäßig in einem rahmenartigen Boden mit Aussparungen zur Aufnahme endseitiger Abschnitte der Strömungskanäle 14 gehalten. Der Wärmetauscher 10 ist in I-Bauweise realisiert, d.h. er wird vom ersten Fluid 1 in Form von Abgas axial, ohne Umlenkung des Abgases, vollständig durchströmt.

Die Anordnung der Strömungsanschlüsse zur Strömungsführung im Wärmetauscher 10 ist in Ansicht (A) der Fig. 1 längs einer Achse und in Ansicht (B) der Fig. 1 quer zur Achse verdeutlicht. Dabei kennzeichnet ein Kreuz einen Strömungskanal 14, der vom ersten Fluid in einer Richtung durchströmt wird, die in die Blattebene geht. Entsprechend dem Gegenstromprinzip fließt das zweite Fluid in Form des Kühlmittels aus der Blattebene heraus. Im Weiteren wird ein Punkt zur Kennzeichnung von Kühlmittelflüssen verwendet, die aus der Blattebene heraustreten.

Beim Wärmetauscher 10 ist ein erster Strömungsanschluss I als Zuführanschluss einer Hauptströmung des Kühlmittels auf der Unterseite des Gehäuses angeordnet und zwar entsprechend dem Gegenstromprinzip auf einer Führungsaustrittsseite 16 des ersten Fluids 1. Ein zweiter Kühlmittelanschluss II ist für eine Nebenströmung des Kühlmittels, wiederum auf der Unterseite des Gehäuses 12 angeordnet. Die Hauptströmung 2H und die Nebenströmung 2N sind vorliegend durch Pfeile symbolisch dargestellt. Der Austritt des zweiten Fluids 2, sowohl der Hauptströmung 2H als auch der Nebenströmung 2N, erfolgt bei einem dritten Strömungsanschluss III auf der Oberseite des Gehäuses 12. Somit sind alle Strömungsanschlüsse auf einer Unter- und Oberseite des Gehäuses 12 angeordnet. Die Anordnung der Strömungsanschlüsse ist derart, dass die Strömung des zweiten Fluids 2 in Form des Kühlmittels im Gehäuseinnenraum 15 einen größtenteils parallel zu einer Strömung des ersten Fluids 1 verlaufende Hauptströmung 2H und eine größtenteils in einem Schnitt quer - vorliegend senkrecht - zur Strömung des ersten Fluids 1 verlaufende Nebenströmung 2N aufweist. Dabei verläuft die Hauptströmung 2H in einer Richtung entgegen der Strömung des ersten Fluids 1.

In einer hier nicht gezeigten Ausführungsform lässt sich die durch Pfeile gekennzeichnete Strömungsrichtung der Hauptströmung 2H und der Nebenströmung 2N auch umkehren. Dabei sind jedoch die Anschlüsse II und III - im Schnitt quer zur Strömung des ersten Fluids 1 - diagonal zueinander versetzt, sodass die Nebenströmung 2N in dem Schnitt einen schrägen oder gekrümmten Strömungsverlauf hat. Dies führt zu einer höheren Verweilzeit der Nebenströmung 2N auf einer Führungseintrittseite 17 des Wärmetauschers und dazu, dass das Kühlmittel mit seiner geringsten Temperatur auf der Führungseintrittseite 17 - also derjenigen Seite, bei der das Abgas die höchste Temperatur hat - zugeführt wird. Durch das so realisierte Gleichstromprinzip ist zwar der thermodynamische Wirkungsgrad des Wärmetauschers 10 geringer als im Gegenstromprinzip, allerdings ist die Kapazität zur Kühlung einer Spitzentemperatur auf der Führungseintrittseite 17 vorteilhafter genutzt.

Fig. 2 zeigt mit gleichen Bezugszeichen für identische oder ähnliche Teile oder Teile ähnlicher oder identischer Funktion eine zweite Ausführungsform eines Wärmetauschers 20, bei dem die Strömungsanschlüsse I, II, III zur Führung der Hauptströmung 2H und der Nebenströmung 2N die gleiche Funktion, jedoch eine unterschiedliche Anordnung haben. Die Anordnung der Strömungsanschlüsse I und III führt wiederum zur Ausbildung des Wärmetauschers 20 im Gegenstromprinzip betreffend den Hauptstrom 2H des zweiten Fluids 2. Darüber hinaus ist jedoch die Führung der Nebenströmung 2N des zweiten Fluids 2 im Schnitt quer zur Strömung des ersten Fluids 1 auf der Führungseintrittseite 17 geändert. Beim Wärmetauscher 20 umfasst die Führung der Nebenströmung 2N des zweiten Fluids 2 eine Umlenkung desselben in dem Schnitt. Vorliegend ist der Strömungsanschluss II auf der der Figuren-Blattseite abgewandten seitlichen Seite des Wärmetauschers 20 angeordnet. Die Nebenströmung 2N wird also auf der seitlichen Seite zugeführt und auf der Oberseite zusammen mit der Hauptströmung 2H durch den Strömungsanschluss III wieder abgeführt. Dies erzwingt für die Nebenströmung 2N eine Umlenkung um 90° im Schnitt auf der Führungseintrittseite 17. Dadurch wird die Verweilzeit des Kühlmittels in der Nebenströmung 2N erhöht und führt zu einer besonders effektiven Kühlung des Abgases an seiner heißesten Stelle im Führungseintrittsbereich 17. Die Ansicht (B) der Fig. 2 zeigt diese Situation wiederum in dem Schnitt quer zur Strömung des ersten Fluids 1.

Ebenfalls wird durch Strömungsumkehr der Hauptströmung und Nebenströmung, d.h. durch Umkehr der durch Pfeile gekennzeichneten Strömungsrichtung, der Wärmetauscher 20 im Gleichstromprinzip realisiert, was zu einer weiter erhöhten Kapazität zur Kühlung der Spitzentemperatur des Abgases in der Führungseintrittsseite 17 führt.

Fig. 3 zeigt eine dritte Ausführungsform eines Wärmetauschers 30, welcher, wiederum im Gegenstromprinzip realisiert, die Strömungsanschlüsse I, II, III auf unterschiedlichen Seiten des Gehäuses angeordnet hat. Im Unterschied zum Wärmetauscher 20 der Fig. 2, welcher zwei Strömungsanschlüsse I, III auf Unter- und Oberseite des Gehäuses 12 aufweist, ist der Wärmetauscher 30 mit zwei Strömungsanschlüssen II, III auf einer seitlichen Seite des Gehäuses 12 versehen. Durch die Anordnung eines Strömungsanschlusses II auf einer der Figuren-Blattseite abgewandten seitlichen Seite des Wärmetauschers 30 und eines Strömungsanschlusses III auf einer der Figuren-Blattseite zugewandten seitlichen Seite des Wärmetauschers 30 wird eine horizontale Durchführung der Nebenströmung 2N des zweiten Fluids 2 erreicht, sodass dadurch ein Strömungswiderstand besonders gering ist. Dennoch ist durch Zuführung der Nebenströmung 2N des Kühlmittels in der Führungseintrittsseite 17 des ersten Fluids 1 eine besonders vorteilhafte Spitzentemperaturkühlung des Abgases erreicht. Zudem ist durch das Gegenstromprinzip, wie auch bei den Wärmetauschern 10, 20, eine thermodynamisch besonders vorteilhafte Ausführung gemäß dem Konzept der Erfindung realisiert

Zusammenfassend ist ein Wärmetauscher 10, 20, 30 zum Wärmetausch zwischen einem ersten Fluid 1 einerseits, insbesondere einem Abgas und/oder einer Ladeluft, und einem zweiten Fluid 2 andererseits, insbesondere einem Kühlmittel, mit einem Wärmetauscher-Block 11 gezeigt. Der Block 11 weist auf:
- ein Gehäuse 12 mit Strömungsanschlüssen I, II, III für das zweite Fluid 2 zu einem von dem zweiten Fluid 2 durchströmbaren Gehäuseinnenraum 15,
- einen Wärmetauscher-Kern 13, der zur voneinander getrennten und wärmetauschenden Führung des ersten und des zweiten Fluids 1, 2, mit einer Anzahl von dem ersten Fluid 1 durchströmbaren Strömungskanälen 14, in dem Gehäuseinnenraum 15 angeordnet ist, wobei
- die Strömungsanschlüsse 14 derart angeordnet sind, dass im Betrieb
- eine Strömung des zweiten Fluids 2 im Gehäuseinnenraum 15 eine größtenteils parallel zu einer Strömung des ersten Fluids 1 verlaufende Hauptströmung 2H und eine größtenteils in einem Schnitt quer zur Strömung des ersten Fluids 1 verlaufende Nebenströmung 2N aufweist. Gemäß dem Konzept der Erfindung ist dabei vorgesehen, dass
   (a) die Hauptströmung 2H in einer Richtung entgegen der Strömung des ersten Fluids 1 verläuft, oder, jedoch nicht erfindungsgemäß,
   (b) die Hauptströmung 2H in einer Richtung der Strömung des ersten Fluids 1 verläuft, und
      (i) die Nebenströmung 2N in dem Schnitt einen schrägen oder gekrümmten Strömungsverlauf hat, und/oder
      (ii) die Hauptströmung 2H mit Strömungsanschlüssen I, II, III an unterschiedlichen Seiten des Gehäuses 12 am Gehäuseinnenraum 15 angeschlossen ist.

### Bezugszeichenliste

- 1: erstes Fluid
- 2: zweites Fluid
- 10: Wärmetauscher
- 11: Wärmetauscher-Block
- 12: Gehäuse
- 13: Wärmetauscher-Kern
- 14: Strömungskanäle
- 15: Gehäuseinnenraum
- 16: Führungsaustrittseite
- 17: Führungseintrittseite
- 20: Wärmetauscher
- 30: Wärmetauscher

- I: erster Strömungsanschluss
- II: zweiter Strömungsanschluss
- III: dritter Strömungsanschluss
- 2H: Hauptströmung
- 2N: Nebenströmung

## Patentansprüche

1. Wärmetauscher (10, 20, 30) zum Wärmetausch zwischen einem ersten Fluid (1) einerseits, insbesondere einem Abgas und/oder einer Ladeluft, und einem zweiten Fluid (2) andererseits, insbesondere einem Kühlmittel, mit
einem Wärmetauscher-Block (11) aufweisend:
- ein Gehäuse (12) mit mindestens drei Strömungsanschlüssen (I, II, III) für das zweite Fluid (2) zu einem von dem zweiten Fluid (2) durchströmbaren Gehäuseinnenraum (15),
- einen Wärmetauscher-Kern (13), der zur voneinander getrennten und wärmetauschenden Führung des ersten und des zweiten Fluids (1, 2), mit einer Anzahl von dem ersten Fluid (1) durchströmbaren Strömungskanälen (14), in dem Gehäuseinnenraum (15) angeordnet ist, wobei
- die mindestens drei Strömungsanschlüsse (I, II, III) derart angeordnet sind, dass im Betrieb
- eine Strömung des zweiten Fluids (2) im Gehäuseinnenraum (15) einerseits eine größtenteils parallel zu einer Strömung des ersten Fluids (1) verlaufende Hauptströmung (2H) und andererseits eine größtenteils in einem Schnitt quer zur Strömung des ersten Fluids (1) verlaufende Nebenströmung (2N) aufweist, und
**dadurch gekennzeichnet, dass**
die Hauptströmung (2H) in einer Richtung entgegen der Strömung des ersten Fluids (1) verläuft und der erste Strömungsanschluss (I) auf der Unterseite des Gehäuses auf der Führungsaustrittsseite (16) des ersten Fluids (1), und wobei
der zweite Kühlmittelanschluss (II) als Eintritt für die Nebenströmung (2N) auf der Unterseite des Gehäuses angeordnet ist und wobei der dritte Strömungsanschluss (III) als Austritt für die Hauptströmung (2H) und für die Nebenströmung (2N) auf der Oberseite des Gehäuses (12) angeordnet ist.

2. Wärmetauscher (10, 20, 30) nach Anspruch 1, **dadurch gekennzeichnet, dass** das Gehäuse (12) eine Anordnung von wenigstens drei Strömungsanschlüssen (I, II, III) aufweist.

3. Wärmetauscher (10, 20, 30) nach einem der Ansprüche 1 oder 2, **dadurch gekennzeichnet, dass** ein gemeinsamer Anschluss für Hauptströmung (2H) und Nebenströmung (2N) eine Abführung des zweiten Fluids (2) ist, insbesondere im Rahmen eines Gegenstromprinzips.

4. Wärmetauscher (10, 20, 30) nach einem der Ansprüche 1 bis 3, **dadurch gekennzeichnet, dass** die Strömungsanschlüsse (I, II, III) derart ausgeführt sind, dass im Betrieb die Hauptströmung (2H) einen größeren Strömungsdurchsatz als die Nebenströmung (2N) hat.

5. Wärmetauscher (10, 20, 30) nach einem der Ansprüche 1 bis 4, **dadurch gekennzeichnet, dass** die Strömungsanschlüsse (I, II, III) derart ausgeführt sind, dass im Betrieb ein Verhältnis des Strömungsdurchsatzes der Nebenströmung (2N) zum Strömungsdurchsatz der Hauptströmung (2H) im Bereich zwischen 0.5 und 0.99 liegt.

6. Aufladesystem, insbesondere Abgasrückführsystem oder Ladeluftsystem, aufweisend einen Wärmetauscher (10, 20, 30) nach einem der Ansprüche 1 bis 5.

7. Aufladesystem nach Anspruch 6, aufweisend eine Leitung zum Transport des zweiten Fluids (2), insbesondere eine zur Motorkühlung geführte Leitung, **dadurch gekennzeichnet, dass** der Wärmetauscher (10, 20, 30) in Serie oder parallel zu der Leitung des zweiten Fluids (2) angeschlossen ist.

## Claims

1. A heat exchanger (10, 20, 30) for the heat exchange between a first fluid (1) on the one hand, in particular an exhaust gas and/or a charge air, and a second fluid (2) on the other hand, in particular a coolant, with
a heat exchanger block (11), having:
- a housing (12) with at least three flow ports (I, II, III) for the second fluid (2) to a housing interior (15) through which the second fluid (2) can flow,
- a heat exchanger core (13) which is arranged for the separated and heat-exchanging guidance of the first and the second fluid (1, 2) in the housing interior (15), with a number of flow channels (14) through which the first fluid (1) can flow, wherein
- the at least three flow ports (I, II, III) are arranged such that, in operation
- a flow of the second fluid (2) in the housing interior (15) has a main flow (2H) running largely parallel to a flow of the first fluid (1) on the one hand and a minor flow (2N) running largely transversely to the flow of the first fluid (1) in a section on the other hand, and
**characterised in that**
the main flow (2H) runs in a direction opposite to the flow of the first fluid (1) and the first flow port (I) on the underside of the housing on the guidance outlet side (16) of the first fluid (1), and wherein
the second coolant port (II) is arranged as an inlet for the minor flow (2N) on the underside of the housing and wherein the third flow port (III) is arranged as an outlet for the main flow (2H) and for the minor flow (2N) on the upper side of the housing (12) .

2. The heat exchanger (10, 20, 30) according to claim 1, **characterised in that** the housing (12) has an arrangement of at least three flow ports (I, II, III) .

3. The heat exchanger (10, 20, 30) according to one of claims 1 or 2, **characterised in that** a common port for the main flow (2H) and the minor flow (2N) is a discharge of the second fluid (2), in particular in the context of a counter-flow principle.

4. The heat exchanger (10, 20, 30) according to one of claims 1 to 3, **characterised in that** the flow ports (I, II, III) are designed such that in operation, the main flow (2H) has a larger flow rate than the minor flow (2N).

5. The heat exchanger (10, 20, 30) according to one of claims 1 to 4, **characterised in that** the flow ports (I, II, III) are designed such that in operation, a ratio of the flow rate of the minor flow (2N) to the flow rate of the main flow (2H) is between 0.5 and 0.99.

6. A charging system, in particular an exhaust gas return system or a charge air system, having a heat exchanger (10, 20, 30) according to one of claims 1 to 5.

7. The charging system according to claim 6, having a conduit for the transport of the second fluid (2), in particular a conduit guided to the engine cooling, **characterised in that** the heat exchanger (10, 20, 30) is connected in series or parallel to the conduit of the second fluid (2).

## Revendications

1. Echangeur de chaleur (10, 20, 30) servant à l'échange de chaleur entre un premier fluide (1), d'une part, en particulier des gaz d'échappement et / ou un air de suralimentation, et un second fluide (2), d'autre part, en particulier un liquide de refroidissement, ledit échangeur de chaleur comprenant un bloc d'échangeur de chaleur (11) présentant :
- un carter (12) comprenant au moins trois raccords d'écoulement (I, II, III) pour le second fluide (2) fourni à un espace intérieur (15) du carter pouvant être traversé par le second fluide (2),
- un noyau d'échangeur de chaleur (13) qui est disposé dans l'espace intérieur (15) du carter, en ayant un certain nombre de conduits d'écoulement (14) pouvant être traversés par le premier fluide (1) et servant au guidage du premier et du second fluide (1, 2) se produisant séparément l'un de l'autre et permettant l'échange de chaleur,
- où les raccords d'écoulement (I, II, III) au moins au nombre de trois sont disposés de manière telle,
- qu'un écoulement du second fluide (2) dans l'espace intérieur (15) du carter présente, au cours du fonctionnement, d'une part un écoulement principal (2H) s'étendant en grande partie parallèlement à un écoulement du premier fluide (1), et présente d'autre part un écoulement secondaire (2N) s'étendant en grande partie, dans une vue en coupe, transversalement par rapport à l'écoulement du premier fluide (1), et
**caractérisé en ce que** l'écoulement principal (2H) s'étend dans une direction opposée à celle de l'écoulement du premier fluide (1), et le premier raccord d'écoulement (I) situé sur le côté de sortie (16) de guidage du premier fluide (1) est disposé sur la partie inférieure du carter, et où le deuxième raccord de liquide de refroidissement (II) servant d'entrée pour l'écoulement secondaire (2N) est disposé sur la partie inférieure du carter, et où le troisième raccord d'écoulement (III) servant de sortie pour l'écoulement principal (2H) et pour l'écoulement secondaire (2N) est disposé sur la partie supérieure du carter (12).

2. Echangeur de chaleur (10, 20, 30) selon la revendication 1, **caractérisé en ce que** le carter (12) présente un agencement au moins de trois raccords d'écoulement (I, II, III).

3. Echangeur de chaleur (10, 20, 30) selon l'une des revendications 1 ou 2, **caractérisé en ce qu'**un raccord commun pour l'écoulement principal (2H) et pour l'écoulement secondaire (2N) est une évacuation du second fluide (2), en particulier dans le cadre d'un principe de flux circulant à contre-courant.

4. Echangeur de chaleur (10, 20, 30) selon l'une quelconque des revendications 1 à 3, **caractérisé en ce que** les raccords d'écoulement (I, II, III) sont conçus de manière telle que, au cours du fonctionnement, l'écoulement principal (2H) ait un débit d'écoulement supérieur à celui de l'écoulement secondaire (2N).

5. Echangeur de chaleur (10, 20, 30) selon l'une quelconque des revendications 1 à 4, **caractérisé en ce que** les raccords d'écoulement (I, II, III) sont conçus de manière telle que, au cours du fonctionnement, un rapport du débit d'écoulement de l'écoulement secondaire (2N), relativement au débit d'écoulement de l'écoulement principal (2H), se situe dans la plage comprise entre 0,5 et 0,99.

6. Système de suralimentation, en particulier système de recyclage des gaz d'échappement ou bien système d'air de suralimentation, présentant un échangeur de chaleur (10, 20, 30) selon l'une quelconque des revendications 1 à 5.

7. Système de suralimentation selon la revendication 6, présentant une conduite servant au transport du second fluide (2), en particulier une conduite servant au refroidissement du moteur, **caractérisé en ce que** l'échangeur de chaleur (10, 20, 30) est raccordé, en série ou en parallèle, à la conduite du second fluide (2).
